Europäisches Patentamt

European Patent Office

Office européen des brevets

(11) Veröffentlichungsnummer: **0 043 464**
B1

## (12) EUROPÄISCHE PATENTSCHRIFT

(45) Veröffentlichungstag der Patentschrift :
02.05.84

(21) Anmeldenummer : 81104525.1

(22) Anmeldetag : 12.06.81

(51) Int. Cl.³ : **C 08 F 2/24**, C 08 F246/00,
C 08 F220/04, C 08 F222/02,
C 08 J 3/02

(54) Verfahren zur Herstellung von Copolymerdispersionen enger Teilchengrössenverteilung mit breitem Konzentrationsbereich dilatanten Fliessverhaltens.

(30) Priorität : 05.07.80 DE 3025562

(43) Veröffentlichungstag der Anmeldung :
13.01.82 Patentblatt 82/02

(45) Bekanntmachung des Hinweises auf die Patenterteilung : 02.05.84 Patentblatt 84/18

(84) Benannte Vertragsstaaten :
AT BE CH DE FR GB IT LI NL SE

(56) Entgegenhaltungen :
FR-A- 2 010 317
US-A- 3 728 295
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Distler, Dieter, Dr.
Pfalzring 159
D-6704 Mutterstadt (DE)
Erfinder : Wolf, Hans, Dr.
Dubliner Strasse 1
D-6700 Ludwigshafen (DE)
Erfinder : Welzel, Gerhard, Dr.
Gontardstrasse 6
D-6800 Mannheim (DE)

Verfahren zur Herstellung von Copolymerdispersionen enger Teilchengrößenverteilung mit breitem
Konzentrationsbereich dilatanten Fließverhaltens

Unter der Eigenschaft von Copolymerdispersionen des dilatanten Fließverhaltens versteht man, daß diese Dispersionen unter der Einwirkung von Scherkräften verdicken, d. h. daß ihre Viskosität mit steigender Schergeschwindigkeit zunimmt, ohne daß dabei eine meßbare Zeitabhängigkeit vorliegt. Diese Scherverdickung ist reversibel und isotherm. Bei einer Dispersion mit dilatantem Fließverhalten gehört zu einer bestimmten Scherkraft eine bestimmte Viskosität. Diese Scherverdickung kann mit einer Volumenzunahme verbunden sein. Hierauf bezieht sich der Begriff « dilatant ». Eine derartige Volumenzunahme muß aber nicht eintreten.

W. K. Bauer und F. A. Collins beschreiben in « Rheology » (Acad. Press. Vol. 4, S. 724 ff) viele Beispiele dilatanter Systeme und geben als Ursache für deren Dilatanz Gründe an, die sich zum Teil widersprechen. So werden hierfür besonders hohe Stabilität der Systeme wie auch besonders niedere Stabilität der Systeme, Aggregation unter Scherung und lokalisiertes Austrocknen angegeben. Die bis jetzt bekannten scherverdickenden Systeme sind entweder nur in einem sehr engen Bereich des Feststoffgehalts, z. B. zwischen 59,5 und 61 Gew.-%, scherverdickend oder es fehlt ihnen die Lagerstabilität, z. B. bei gewissen Pigmentdispersionen. Auch tritt eine Verdickung in vielen Fällen erst bei sehr hohen Schergeschwindigkeiten ein.

Aus der GB-A-1 217 446 ist ein dilatanter Latex bekannt, der durch Emulsionspolymerisation erhalten wird. Die Emulsionspolymerisation muß dabei in Gegenwart eines mehrwertigen Alkohols durchgeführt werden, der in Wasser löslich ist und in dem das Latexpolymerprodukt nicht oder im wesentlichen nicht löslich ist. Der Latex soll für Beschichtungsprodukte eingesetzt werden können. Zur Herstellung des Latex sollen 4 bis 7 C-Atome enthaltende monoolefinisch ungesättigte Ester, zusammen mit 5 bis 13 C-Atomen enthaltenden monoolefinisch ungesättigten Estern und 1 bis 5 Gew.-%, bezogen auf die gesamten Monomeren an einer aliphatischen monoolefinisch ungesättigten Carbonsäure mit 3 bis 4 Kohlenstoffatomen eingesetzt werden. Nach diesem Verfahren erhält man jedoch koagulathaltige Latices, die nach Filtration bis zu einer Schergeschwindigkeit von 500 sec$^{-1}$ kein dilatantes Verhalten zeigen.

Es wurde nun gefunden, daß man Copolymer-Dispersionen enger Teilchengrößenverteilung mit breitem Konzentrationsbereich mit dilatantem Fließverhalten durch Emulsionscopolymerisation von 1 bis 10 Gew.-%, bezogen auf die gesamten Monomeren, α,β-monoolefinisch ungesättigte Mono- und/oder Dicarbonsäuren mit anderen monoolefinisch ungesättigten Monomeren sowie von 0 bis 5 Gew.-% mehrfach olefinisch ungesättigten Monomeren in Gegenwart üblicher Emulgier- und Dispergiermittel, Polymerisationsinitiatoren und ggf. Regler mit Vorteil herstellen kann, wenn man die Monomeren in wäßriger Emulsion unter gleichzeitigem Agglomerieren bei nur partiellem Verschmelzen der zunächst entstandenen Polymerteilchen eines Teilchendurchmessers von 5 bis 200 nm bei einer Temperatur nahe der Glastemperatur des entstehenden Copolymerisates copolymerisiert und dann

A. soweit noch nicht gegeben, den Copolymerisatgehalt der entstandenen wäßrigen Copolymerisat-Dispersion auf 35 bis 55 Gew.-% und den pH-Wert auf 3 bis 5 einstellt, oder

B. das in der entstandenen wäßrigen Copolymerisat-Dispersion enthaltene Wasser ganz oder teilweise durch ein mit Wasser mischbares und das Copolymerisat nicht lösendes oder quellendes Lösungsmittel ersetzt.

Bei dem neuen Verfahren werden die α,β-monoolefinisch ungesättigten Mono- und/oder Dicarbonsäuren vorzugsweise in Mengen von 2 bis 10 Gew.-%, bezogen auf die gesamten Monomeren, eingesetzt. Als derartige Carbonsäuren kommen vor allem 3 bis 4 C-Atome enthaltende Mono- und Dicarbonsäuren wie Acryl- und/oder Methacrylsäure sowie Maleinsäure, Itaconsäure und Fumarsäure ferner Monoester derartiger Dicarbonsäuren mit meist 1 bis 4 C-Atomen enthaltenden Alkanolen, z. B. Maleinsäuremonomethylester, Fumarsäuremonoethylester und Itaconsäure-n-butylester, in Frage. Die Mono- und Dicarbonsäuren (einschließlich der Halbester) der genannten Art enthalten im allgemeinen 3 bis 9 C-Atome. Von besonderem Interesse sind Acrylsäure, Methacrylsäure und Maleinsäure.

Als andere monoolefinisch ungesättigte Monomere kommen allgemein solche in Frage, die wasserunlösliche Homopolymerisate ergeben. Monomere dieser Art sind vor allem monoolefinisch ungesättigte Carbonsäureester, insbesondere Acryl- und Methacrylsäureester von 1 bis 10, insbesondere von 1 bis 4 C-Atome enthaltenden Alkanolen sowie Vinylester von meist 2 bis 12 C-Atomen enthaltenden geradkettigen oder verzweigten aliphatischen Carbonsäuren. Beispiele für derartige olefinisch ungesättigte Ester sind vor allem die Ester des Methanols, Ethanols, n-Propanols, n-Butanols, Isobutanols, tert.-Butanols und 2-Ethylhexylalkohols der Acryl- und Methacrylsäure, insbesondere Ethylacrylat und -methacrylat, n-Butylacrylat und -methacrylat, Isobutylacrylat und -methacrylat sowie Methylmethacrylat. Geeignete Vinylester sind vor allem Vinylacetat, Vinylpropionat und ferner Vinyl-n-butyrat. Von großem Interesse als monoolefinisch ungesättigtes Monomeres ist zudem Styrol. In Anteilen bis zu 10 Gew.-%, bezogen auf die Gesamtmonomeren kommt auch Acrylnitril als Comonomeres in Betracht. Ferner geeignete monoolefinisch ungesättigte Monomere sind Vinylhalogenide wie Vinylchlorid und Vinylidenchlorid. Als monomerengemisch für die Herstellung der dilatanten Dispersionen von besonderem Interesse sei ein solches genannt, das aus (a) 2 bis 10 Gew.-% der α,β-monoolefinisch ungesättigten Mono- und/oder Dicarbonsäuren, (b) 0 bis 98 Gew.-% (Meth) acrylsäureestern, 1 bis 4 C-Atome enthaltender Alkanole, (c) 0 bis 98 Styrol und/oder Methylmethacrylat und (d) 0 bis 3 Gew.-% mehrfach olefinisch ungesättigten Monomeren besteht, wobei die Menge der Monomeren (b) und (c) zusammen 90 bis 98 Gew.-% beträgt. Ein derartiges Gemisch kann mit Vorteil bei Temperaturen von 60 bis 95 °C in wäßriger Emulsion in Gegenwart von 0 bis 0,5 Gew.-%, anionische Emulgatoren und 0 bis 1 Gew.-% bezogen auf die Menge der Monomeren, nichtionische Emulgatoren copolymerisiert werden.

Für das Verfahren kommen allgemein die üblichen Emulgier- und Dispergiermittel, z. B. Alkali- und Ammoniumsalze der C$_{12}$-C$_{18}$-Alkylsulfonate und -sulfate, alkoxylierte, insbesondere äthoxilierte und/oder propoxilierte Alkylphenole mit 8 bis 12 C-Atomen im Alkylrest, oder (alkoxilierte), 12 bis 18 C-Atome enthaltende Fettalkohole mit 5 bis 50 Mol Alkylenoxidresten je Molekül in Frage. Auch die für die Emulsionscopolymerisation eingesetzten Polymerisations-initiatoren sind für die Durchführung von Emulsionspolymerisationen üblich. Geeignet sind z. B. Ammonium- und Alkalisalze der Peroxodischwefelsäure, Wasserstoffperoxid und Cumolhydroperoxid.

Im allgemeinen ist es nicht erforderlich, bei dem Verfahren Regler mitzuverwenden, doch können in manchen Fällen geringe Mengen üblicher Regler, z. B. tert. Dodecylmerkaptan von Vorteil sein.

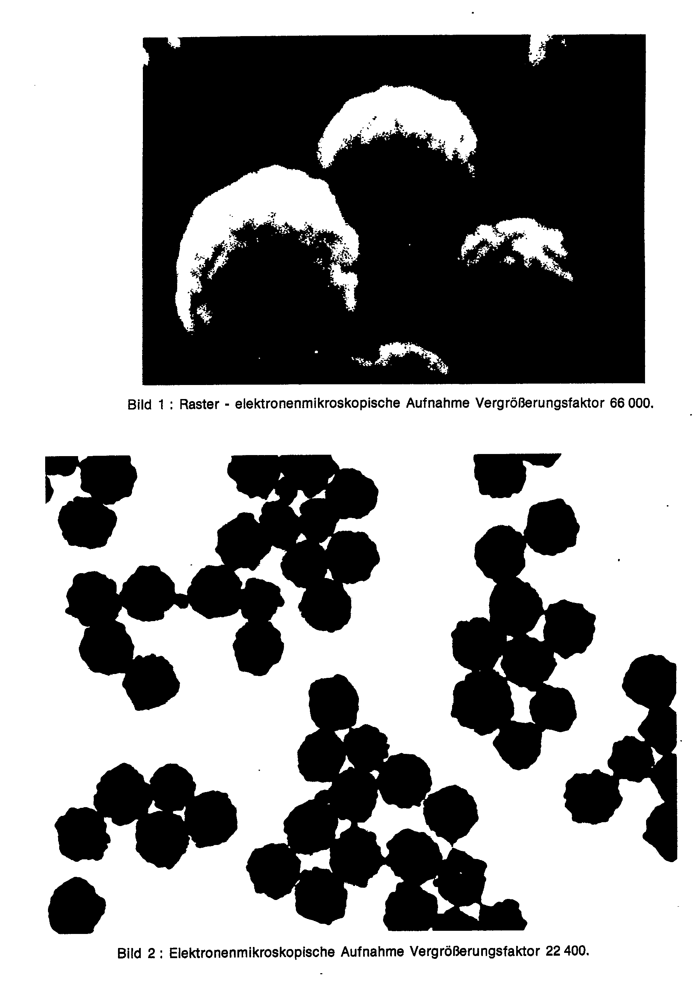

Das neue Verfahren der Emulsionscopolymerisation soll derart durchgeführt werden, daß die zunächst primär entstandenen Polymerteilchen partiell miteinander verschmelzen, wenn sie einen Teilchendurchmesser von 5 bis 200 nm aufweisen. Dies ist eine spezielle Art des Agglomerierens der primär gebildeten Copolymerisat-Teilchen. Sie wird dadurch ermöglicht, daß die Temperatur des Polymerisations-Ansatzes während dieser Phase nahe der Glastemperatur des entstehenden Copolymerisates gehalten wird. Im allgemeinen kann dabei die Temperatur bis zu etwa 10 °C nach oben oder unten von der Glastemperatur abweichen. Man polymerisiert also im allgemeinen in einem Temperaturbereich von etwa ± 10 °C um die Glastemperatur des entstehenden Copolymerisats. Der Grad der möglichen Abweichung hängt von der Viskosität der betreffenden Copolymerisat-Teilchen ab und kann umso größer sein, je höher die Viskosität der primär gebildeten Copolymerisat-Teilchen ist. Durch die Wahl der Temperatur soll erreicht werden, daß kein vollständiges Verschmelzen der primär gebildeten Copolymerisat-Teilchen stattfindet (die Glastemperatur eines Copolymerisatsystems kann leicht aus den für die Homopolymerisate bekannten Glastemperaturen additiv berechnet werden ; dabei ist aber zu berücksichtigen, daß die Glastemperaturen der sich bildenden Polymerisatteilchen durch die vorhandenen Monomeren erniedrigt werden. Glastemperaturen sind z. B. in Polymer Hand Book, Brandrup und Immergut, Interscience Publ. New York, N. Y. 1967 angegeben). Man erhält dann bei der erfindungsgemäß durchgeführten Emulsionscopolymerisation agglomerierte Copolymerisat-Teilchen, die eine stark unebene unregelmäßige Oberfläche aufweisen. Die im Anhang beigefügten Abbildungen 1 bis 4 zeigen elektronenmikroskopische Aufnahmen von Copolymerisat-Teilchen von nach dem neuen Verfahren hergestellten dilatanten Copolymer-Dispersionen. Diese Form der Teilchen bleibt auch erhalten wenn man in einer erfindungsgemäß hergestellten dilatanten Polymerdispersion weitere Monomere polymerisiert.

Die Bedingungen des Agglomerierens von zunächst primär gebildeten Copolymerisat-Teilchen ist an sich bekannt. Bei dem erfindungsgemäßen Verfahren ist hierfür der Gehalt an monoolefinisch ungesättigten Mono- und/oder Dicarbonsäuren mitverantwortlich. Als zusätzliche Maßnahme kann beispielsweise eine verhältnismäßig geringe Menge an Emulgator bei der Durchführung der Emulsionscopolymerisation gewählt werden. Es ist auch möglich, agglomerierend wirkende Zusätze, z. B. Mischpolymere aus Alkylenoxid und Propylenoxid mit Trübungspunkten nahe der Polymerisations-temperatur bzw. hochmolekulare oxidierte Polyethylenoxide während der Copolymerisation zuzusetzen. Schließlich kann eine Agglomeration während der Copolymerisation auch erreicht werden, indem man mit besonders kleinen Emulgatormengen arbeitet.

Bei der in an sich üblicher Weise eingeleiteten Emulsionscopolymerisation der Monomeren werden primär solche Teilchen mit einem Teilchendurchmesser von 5 bis 200 nm innerhalb von 50 bis 80 % der gesamten Polymerisationszeit bzw. bei Durchführung eines Emulsions-Zulaufverfahrens nach Zugabe von 50 bis 80 % der Monomeren-Emulsion zu der wäßrigen Phase gebildet. Ein besonders starkes dilatantes Verhalten weisen solche nach dem neuen Verfahren hergestellte Polymerisat-Dispersionen auf, bei denen die primär gebildeten Copolymerisat-Teilchen beim partiellen Verschmelzen einen Teilchendurchmesser von 50 bis 100 nm aufweisen. Als Maß für den Teilchendurchmesser der primär gebildeten Copolymerisat-Teilchen kann die während der Copolymerisation gemessene Lichtdurchlässigkeit (Lichtstreuung dienen).

Die auf die bis hierher beschriebene Weise hergestellten wäßrigen Copolymer-Emulsionen sind nur dann als solche in einem breiten Konzentrationsbereich dilatant, wenn ihr Copolymerisat-Gehalt 35 bis 55 Gew.-%, bezogen auf die Dispersion, beträgt und ihr pH-Wert unter 5 liegt. Liegt dagegen der Copolymerisat-Gehalt oder der pH-Wert außerhalb dieser Bereiche, so muß durch Zugabe von Wasser oder durch Aufkonzentrieren die Konzentration und durch Zugabe von verdünnten Alkalien der pH-Wert eingestellt werden um eine dilatante wäßrige Copolymer-Dispersion zu erhalten.

Zieht man es aber vor, und dies ist für manche Anwendungsgebiete von Vorteil, eine nicht-wäßrige Copolymerisat-Dispersion mit dilatantem Fließverhalten herzustellen, so ist die Einstellung des Konzentrations- und pH-Bereiches nicht erforderlich und man kann an deren Stelle das in der wäßrigen Copolymerisat-Dispersion enthaltene Wasser ganz oder teilweise durch ein mit Wasser mischbares und das Copolymerisat nicht lösendes oder quellendes Lösungsmittel ersetzen. Als derartige Lösungsmittel kommen Formamid, Ethylenglykol, Diethylenglykol, Triethylenglykol und Glycerin, mit Vorteil in Frage. Hiervon werden Ethylenglykol und Diethylenglykol vorgezogen. Nach Zusatz der für die Einstellung des Feststoffgehalts erforderlichen Menge derartiger Lösungsmittel kann man das Wasser ganz oder teilweise durch Abdampfen entfernen und erhält dann eine Dispersion mit dilatantem Fließverhalten.

Schließlich ist es auch möglich, das Wasser aus der zunächst hergestellten wäßrigen Copolymerisat-Dispersion durch Gefrier- oder Sprühtrocknung abzutrennen und das erhaltene pulverförmige Copolymerisat dann in einem dieses Copolymerisat nicht lösenden oder quellenden Lösungsmittel zu verteilen. Dies ist jedoch nur möglich, wenn die Glastemperatur des Copolymerisates merklich über der Raum- bzw. Trocknungstemperatur liegt.

Nach dem neuen Verfahren erhält man dilatante Copolymer-Dispersionen mit enger Teilchengrößenverteilung, im allgemeinen soll bei ihnen das Verhältnis von Gew.-Mittel der Teilchen zu deren Zahlenmittel 1 bis 1,2 betragen, insbesondere 1 bis 1,1. Der Copolymerisat-Gehalt der neuen Copolymer-Dispersionen soll vorzugsweise 40 bis 55 Gew.-% betragen. Für die meisten Anwendungsgebiete wird die Monomerenzusammensetzung derart gewählt, daß die Glastemperatur des Copolymerisats über 50 °C liegt. Durch Mitverwendung von mehrfach olefinisch ungesättigten Monomeren (d) — als solche kommen vor allem Ethylenglykol-diacrylat und -methacrylat, Butandiol-1,4-diacrylat und -methacrylat, Trimethylolpropantri-acrylat und -methacrylat und Divinylbenzol in Frage — wird erreicht, daß ein Zusammenfließen der agglomerierenden Teilchen erschwert wird, indem Vernetzungsstellen in die Polymerisat-Teilchen eingebaut werden. Anstelle der mehrfach olefinisch ungesättigten Monomeren der genannten Art können in manchen Fällen auch solche Monomere eingesetzt werden, die zusätzlich zu einer olefinischen Doppelbindung eine andere reaktive Gruppe enthalten. Beispiele für derartige Comonomere sind : N-Methylolacryl- und -methacrylamid und Glycidylacrylat und -methacrylat.

Die Scherverdickbarkeit der nach dem erfindungsgemäßen Verfahren hergestellten Copolymerisat-Dispersion ist von deren Feststoffgehalt abhängig : Mit steigendem Feststoffgehalt sinkt die kritische Schergeschwindigkeit, d. h. die Schergeschwindigkeit von der an sich die Viskosität der Dispersion erhöht. Im allgemeinen liegt der Bereich der kritischen Schergeschwindigkeiten der nach dem neuen Verfahren erhaltenen Copolymerisat-Dispersionen zwischen 0,5 und 500 sec$^{-1}$.

Die nach dem neuen Verfahren hergestellten Copolymer-Dispersionen sind sehr stabil und lagerfähig und zeigen stark dilatantes Fließverhalten. Sie eignen sich beispielsweise für die Herstellung von Sportschuhpolstern, insbesondere für Skischuhpolster, Flüssigkeitskupplungen, Stoßdämpferfüllungen, Drehzahlbegrenzer, für die Panzerung von Fahrzeugen und für die Füllung von orthopädischen Kissen.

Die in den folgenden Beispielen angegebenen Teile und Prozente beziehen sich auf das Gewicht.

## Beispiel 1

In einer Vorlage werden 420 Teile Wasser mit 140 Teilen Zulauf I und 18 Teilen Zulauf II gemischt und unter Rühren auf 85 °C aufgeheizt, wobei die Polymerisation anspringt. Man läßt dann den Rest der Zuläufe I und II gleichmäßig innerhalb 3 Stunden zufahren und polymerisiert jeweils bei 85 °C eine Stunde nach.

Zulauf I : 450 Teile Styrol, 500 Teile tert.-Butylacrylat, 20 Teile Maleinsäure, 30 Teile Methacrylamid, 348 Teile Wasser, 15 Teile Natriumlaurylsulfat (20 %ige wäßrige Lösung), 25 Teile eines üblichen Additionsproduktes von 25 Molen Ethylenoxid an Isooctylphenol (20 %ige wäßrige Lösung).

Zulauf II : 7 Teile Kaliumperoxodisulfat, 180 Teile Wasser.

Die erhaltene Dispersion wird in noch heißem Zustand auf einen Feststoffgehalt von etwa 40 % verdünnt und unter Zusatz von Ammoniak auf einen pH-Wert zwischen 3 und 4,5 gestellt.

Anstelle des Verdünnens und Einstellens des pH-Wertes kann auch mit 1 000 Teilen Ethylenglykol verdünnt und anschließend das Wasser ganz oder zum Teil, ggf. unter vermindertem Druck abdestilliert werden.

In beiden Fällen erhält man eine Copolymerisat-Dispersion mit enger Teilchengrößenverteilung, die stark dilatantes Fließverhalten aufweist. Die Teilchen entsprechen ihrem Aussehen nach den in Abbildung 1 bis 3 gezeigten Teilchen.

Bei Raumtemperatur ist die kritische Schergeschwindigkeit der Dispersion von deren pH-Wert abhängig und hat bei der 48 %igen wäßrigen Dispersion folgende Werte :

| $D_{krit.}$ s$^{-1}$ | pH-Wert |
|---|---|
| 50 | 3,8 |
| 70 | 3,85 |
| 100 | 3,95 |
| 180 | 4,32 |
| 320 | 4,46 |
| 500 | 4,5 |

4

# 0 043 464

Außerdem steigt die kritische Schergeschwindigkeit der 47 %igen wäßrigen Dispersion eines pHs von 4,24 mit der Temperatur wie folgt an:

| $D_{krit.}$ s$^{-1}$ | T °C |
|---|---|
| 50 | 10 |
| 140 | 21 |
| 220 | 25 |
| 400 | 41 |

## Beispiel 2

In einer Vorlage wird ein Gemisch aus 24 Teilen Wasser, 7 Teilen Zulauf I und 1 Teil Zulauf II auf 80 °C erhitzt, 15 Minuten auf dieser Temperatur gehalten (anpolymerisieren) und dann die restliche Menge der Zuläufe (I) und (II) innerhalb von 2 1/2 Stunden zugegeben und noch eine weitere Stunde bei der Temperatur von 80 °C nachpolymerisiert.

Zulauf I : 40 Teile Styrol, 6 Teile Äthylacrylat, 1,5 Teile Acrylsäure, 1,5 Teile Methacrylamid, 1 Teil Maleinsäure, 0,375 Teile Natriumlaurylsulfat (40 %ige wäßrige Lösung).

Zulauf II : 8 Teile Wasser, 0,35 Teile Kaliumperoxodisulfat.
Nach Beendigung der Polymerisation wird wie in Beispiel 1 angegeben gearbeitet.
Die erhaltene ethylenglykolhaltige 50 %ige Dispersion ist niederviskos und hat bei Raumtemperatur eine kritische Schergeschwindigkeit von etwa 5 sec$^{-1}$, bei 50 °C eine solche von 100 sec$^{-1}$.

## Beispiel 3

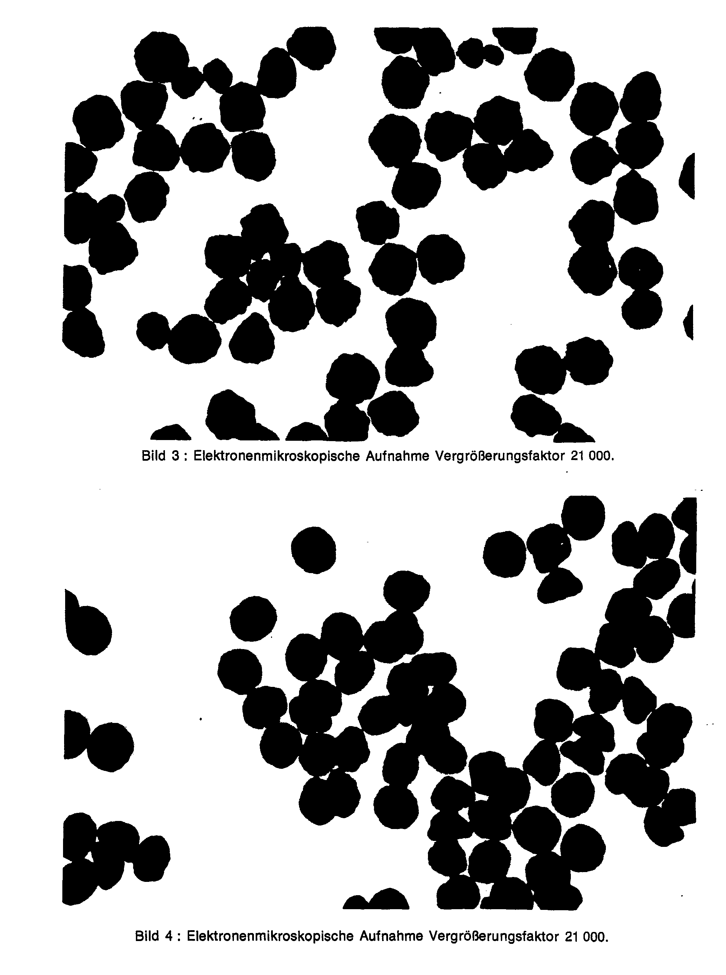

Man arbeitet wie in Beispiel 2 angegeben, gibt aber 0,5 Teile 1,4-Butandioldiacrylat in Zulauf I nachdem die Hälfte dieses Zulaufs schon zum Polymerisationsansatz zugegeben ist. Erhalten wird dann, wenn im übrigen in gleicher Weise weitergearbeitet wird, eine dilatante Copolymer-Dispersion deren Polymerteilchen in Abb. 4 abgebildet sind. Die erhaltene ethylenglykolhaltige Dispersion zeigt bei einem Polymergehalt von 45 % bei Raumtemperatur eine kritische Schergeschwindigkeit von 15 sec$^{-1}$, bei 40 °C von 200 sec$^{-1}$ und bei 50 °C von 480 sec$^{-1}$.

## Ansprüche

1. Verfahren zur Herstellung von Copolymer-Dispersionen enger Teilchengrößenverteilung mit breitem Konzentrationsbereich mit dilatantem Fließverhalten durch Emulsionscopolymerisation von 1 bis 10 Gew.-%, bezogen auf die gesamten Monomeren, $\alpha,\beta$-monoolefinisch ungesättigten Mono- und/oder Dicarbonsäuren mit anderen monoolefinisch ungesättigten Monomeren sowie von 0 bis 5 Gew.-% mehrfach olefinisch ungesättigten Monomeren in Gegenwart üblicher Emulgier- und Dispergiermittel, Polymerisationsinitiatoren und gegebenenfalls Reglern, dadurch gekennzeichnet, daß man die Monomeren in wäßriger Emulsion unter gleichzeitigem Agglomerieren bei nur partiellem Verschmelzen der zunächst entstandenen Polymerteilchen eines Teilchendurchmessers von 5 bis 200 nm bei einer Temperatur nahe der Glastemperatur des entstehenden Copolymerisates copolymerisiert und dann

A. soweit noch nicht gegeben, den Copolymerisatgehalt der entstandenen wäßrigen Copolymerisat-Dispersion auf 35 bis 55 Gew.-% und den pH-Wert auf 3 bis 5 einstellt, oder

B. das in der entstandenen wäßrigen Copolymerisat-Dispersion enthaltene Wasser ganz oder teilweise durch ein mit Wasser mischbares und das Copolymerisat nicht lösendes oder quellendes Lösungsmittel ersetzt.

2. Verfahren nach Anspruch 1, dadurch gekennzeichnet, daß bei der Emulsions-Copolymerisation

a) 2 bis 10 Gew.-% der $\alpha,\beta$-monoolefinisch ungesättigten mono- und/oder Dicarbonsäure
b) 0 bis 98 Gew.-% (Meth)acrylester 1 bis 4 C-Atome enthaltender Alkanole
c) 0 bis 98 Gew.-% Styrol und/oder Methylmethacrylat
d) 0 bis 3 Gew.-% an mehrfach olefinisch ungesättigten Monomeren

wobei die Menge der Monomeren (b) und (c) zusammen 90 bis 98 Gew.-% beträgt, eingesetzt und bei 60 bis 95 °C in Gegenwart von 0 bis 0,5 Gew.-% an anionischem Emulgator und 0 bis 1 Gew.-% bezogen auf die Menge der Monomeren, an nichtionischem Emulgator copolymerisiert werden.

## Claims

1. A process for the preparation of copolymer dispersions having a narrow particle size distribution, and exhibiting dilatant flow over a broad range of concentrations, by emulsion copolymerization of from 1 to 10 % by weight, based on total monomers, of α,β-monoolefinically unsaturated monocarboxylic acids and/or dicarboxylic acids with other monoolefinically unsaturated monomers and with from 0 to 5 % by weight of polyolefinically unsaturated monomers in the presence of conventional emulsifiers, dispersants and polymerization initiators, and in the presence or absence of regulators, wherein the monomers are copolymerized in aqueous emulsion, with simultaneous agglomeration but only partial fusion of the initially formed polymer particles, which have a diameter of from 5 to 200 nm, at a temperature near the glass transition temperature of the copolymer formed, and thereafter

A. the copolymer content of the aqueous copolymer dispersion formed is brought to 35-55 % by weight and the pH to 3-5, unless these values already obtain, or

B. the water contained in the aqueous copolymer dispersion formed is entirely or partially replaced by a watermiscible solvent which does not dissolve or swell the copolymer.

2. A process as claimed in claim 1, wherein the emulsion copolymerization is carried out with

a) from 2 to 10 % by weight of the α,β-monoolefinically unsaturated monocarboxylic acid and/or dicarboxylic acid,

b) from 0 to 98 % by weight of acrylic acid esters and/or methacrylic acid esters of alkanols of 1 to 4 carbon atoms,

c) from 0 to 98 % by weight of styrene and/or methyl methacrylate and

d) from 0 to 3 % by weight of polyolefinically unsaturated monomers,

the amount of the monomers (b) and (c) together being from 90 to 98 % by weight, at 60-95 °C, in the presence of from 0 to 0.5 % by weight of an anionic emulsifier and from 0 to 1 % by weight of a non-ionic emulsifier, the percentages being based on the amount of monomers.

## Revendications

1. Procédé de préparation de dispersions de copolymères, à distribution étroite de grosseurs de particules, à large zone de concentration et à comportement d'écoulement dilatant, par copolymérisation en émulsion de 1 à 10 % en poids, rapportés à l'ensemble des monomères, d'acides mono- et/ou dicarboxyliques à insaturation monooléfinique en α,β, avec d'autres monomères à insaturation monooléfinique, ainsi que de 0 à 5 % en poids de monomères à multiple insaturation oléfinique, en présence d'émulsifiants et dispersants usuels, d'initiateurs de polymérisation et éventuellement de régulateurs, caractérisé par le fait que l'on copolymérise les monomères en émulsion aqueuse, avec agglomération simultanée, lors d'une fusion seulement partielle des particules de polymères produits d'abord, d'un diamètre de particules de 5 à 200 nm, à une température voisine de la température de transition vitreuse du copolymère naissant, et puis

A. dans la mesure où cela n'est pas encore réalisé, on règle la teneur en copolymère de la dispersion de copolymère aqueuse obtenue à une valeur de 35 à 55 % en poids et le pH à une valeur de 3 à 5, ou

B. on remplace l'eau contenue dans la dispersion de copolymère aqueuse obtenue, totalement ou partiellement, par un solvant miscible avec l'eau et ne dissolvant ou ne gonflant pas le copolymère.

2. Procédé selon la revendication 1, caractérisé par le fait que l'on utilise, pour la copolymérisation en émulsion.

a) 2 à 10 % en poids de l'acide mono- et/ou dicarboxylique à insaturation monooléfinique en α,β,

b) 0 à 98 % en poids d'alcanols contenant des (meth)acrylesters de 1 à 4 atomes C,

c) 0 à 98 % en poids de styrène et/ou méthacrylate de méthyle,

d) 0 à 3 % en poids de monomères à multiple insaturation oléfinique,

la quantité des monomères (b) et (c) s'élevant ensemble à 90-98 % en poids, et on copolymérise en présence de 0 à 0,5 % en poids d'émulsifiant anionique et 0 à 1 % en poids, rapportés à la quantité des monomères, d'émulsifiant non ionique.

Bild 1 : Raster - elektronenmikroskopische Aufnahme Vergrößerungsfaktor 66 000.

Bild 2 : Elektronenmikroskopische Aufnahme Vergrößerungsfaktor 22 400.

Bild 3 : Elektronenmikroskopische Aufnahme Vergrößerungsfaktor 21 000.

Bild 4 : Elektronenmikroskopische Aufnahme Vergrößerungsfaktor 21 000.